# EUROPÄISCHE PATENTANMELDUNG

(11) **EP 1 473 919 A1**
(43) Veröffentlichungstag der Anmeldung: **03.11.2004**
(21) Anmeldenummer: 03009901.4
(22) Anmeldetag: 30.04.2003
(51) Int. Cl.: H04M 15/08, H04Q 3/00

(54) **Automatisches R-Gespräch**

(71) Anmelder: 01058 Telecom GmbH, 40211 Düsseldorf (DE)
(72) Erfinder: Varol, Ömer Kaan, 40468 Düsseldorf (DE)
(74) Vertreter: Stenger, Watzke & Ring Patentanwälte

(57) **Zusammenfassung**

Die Erfindung betrifft ein Verfahren zur Vermittlung von empfangsseitig zu zahlenden Telefongesprächen. Um ein Verfahren bereit zu stellen, das bei gleichzeitig weitestgehender Vermeidung von Fehlern bei der Gesprächsvermittlung wenig kostenintensiv und damit wirtschaftlich ist, wird mit der Erfindung ein Verfahren vorgeschlagen, bei dem die Rufnummer des Anrufempfängers vom Anrufenden an ein Vermittlungssystem übertragen wird, die Rufnummer in einem Datenbankabgleich auf Gültigkeit überprüft wird und anschließend nach vorhergehender Autorisierung durch den Anrufempfänger eine kommunikationstechnische Verbindung zwischen dem Anrufenden und dem Anrufempfänger automatisch aufgebaut wird.

## Beschreibung

Die Erfindung betrifft ein Verfahren zur Vermittlung von empfangsseitig zu zahlenden Telefongesprächen.

Die Besonderheit empfangsseitig zu zahlender Telefongespräche, sogenannter R-Gespräche besteht darin, daß nicht der Anrufende sondern der Anrufempfänger die infolge des Telefongespräches entstehenden Kosten übernimmt. Um sicherzustellen, daß nicht in ungerechtfertigter Weise empfängerseitig Kosten entstehen, wird der Anrufempfänger vor Aufbau einer kommunikationstechnischen Verbindung zwischen Anrufendem und Anrufempfänger dazu aufgefordert, sein Einverständnis zur Kostenübernahme zu erklären. Bleibt eine solche Erklärung des Anrufempfängers aus, so wird dies seitens des operienden Telekommunikationsunternehmens zur Kenntnis genommen und eine kommunikationstechnische Verbindung zwischen Anrufendem und Anrufempfänger wird nicht aufgebaut.

Zur Vermittlung vom empfangsseitig zu zahlenden Telefongesprächen wird gemäß dem Stand der Technik als Operatoren bezeichnetes Vermittlungspersonal eingesetzt, die nach Anfrage durch den Anrufenden eine Verbindung zum Anrufempfänger aufbauen und diesen nach seinem Einverständnis zur Übernahme der durch die Führung des Telefongespräches zu erwartenden Kosten befragen. Lehnt der Anrufempfänger die Übernahme der Kosten ab, so wird der Anrufende vom Vermittlungspersonal hierüber informiert und die vom Anrufenden gewünschte Verbindung zum Anrufempfänger wird durch das Vermittlungspersonal nicht freigegeben Sollte der Anrufempfänger mit der Kostenübernahme einverstanden sein, so wird vom Vermittlungspersonal eine entsprechende kommunikationstechnische Verbindung zwischen Anrufendem und Anrufempfänger freigeschaltet. Ohne weitere Zwischenschaltung des Vermittlungspersonals kann alsdann ein Gespräch zwischen Anrufendem und Anrufempfänger geführt werden, wobei die hierdurch entstehenden Kosten dem Anrufempfänger in Rechnung gestellt werden.

Das vorbeschriebene Vermittlungsverfahren ist aus dem Stand der Technik bekannt und hat sich im alltäglichen Praxiseinsatz bewährt. Von Nachteil sind jedoch die hohen Vermittlungskosten sowie die durch den manuellen Verbindungsaufbau bedingten Fehlschaltungen, die insbesondere zu Unzufriedenheit des Anrufenden bzw. des Anrufempfängers führen.

Begründet sind die hohen Vermittlungskosten einerseits durch das notwendigerweise erforderliche Vermittlungspersonal sowie andererseits durch die Ausrüstung, Wartung und Pflege der vom Vermittlungspersonal genutzten Arbeitsplätze. Für die Vermittlung eines empfangsseitig zu zahlenden Telefongespräches ist gemäß dem Stand der Technik vorgesehen, daß der Anrufende die mit Vermittlungspersonal besetzte Vermittlungsstelle anruft. Dies kann beispielsweise durch die Wahl der Ziffer "0" erfolgen. Nach dem Zufallsprinzip wird der Anrufende einem freien Vermittler, dem sogenannten Operator, zugestellt. Dieser fragt den Anrufenden nach der Rufnummer des Anrufempfängers, wählt die ihm mitgeteilte Rufnummer und fragt den Anrufempfänger im Falle der Gesprächsentgegennahme nach seinem Einverständnis zur Kostenübernahme. Bestätigt dieser, so stellt der Operator eine kommunikationstechnische Verbindung zwischen Anrufendem und Anrufempfänger her. Bleibt die Bestätigung des Anrufempfängers aus oder nimmt dieser nach Rufwahl durch den Operator das Gespräch nicht entgegen, so wird der Anrufende hierüber informiert und ein Gesprächsaufbau zwischen Anrufendem und Anrufempfänger kommt nicht zustande.

Das manuell vom Operator durchzuführende Vermittlungsverfahren ist in nachteiliger Weise nicht nur zeit-, sondern auch wegen der Personalkosten wirtschaftlich aufwendig. Insgesamt ergeben sich daher vergleichsweise hohe Kosten alleine durch die Gesprächsvermittlung. Hinzu kommt, daß es beispielsweise infolge von Verständigungsschwierigkeiten zwischen Anrufendem/Anrufempfänger einerseits und Operator andererseits zu Fehlern bei der Gesprächsvermittlung kommen kann.

Ausgehend vom vorbeschriebenen Stand der Technik ist es daher **Aufgabe** der Erfindung, ein Verfahren zur Vermittlung von empfangsseitig zu zahlenden Telefongesprächen anzugeben, das bei gleichzeitig weitestgehender Vermeidung von Fehlern bei der Gesprächsvermittlung weniger kostenintensiv und damit wirtschaftlicher ist.

Zur **Lösung** dieser Aufgabe wird mit der Erfindung vorgeschlagen ein Verfahren zur Vermittlung von empfangsseitig zu zahlenden Telefongesprächen, bei dem die Rufnummer des Anrufempfängers vom Anrufenden an ein Vermittlungssystem übertragen wird, die Rufnummer in einem Datenbankabgleich auf Gültigkeit überprüft wird und anschließend nach vorhergehender Autorisierung durch den Anrufempfänger eine kommunikationstechnische Verbindung zwischen dem Anrufenden und dem Anrufempfänger automatisch aufgebaut wird.

Erfindungsgemäß erfolgt mithin im Unterschied zum Stand der Technik eine Gesprächsvermittlung vollautomatisch, so daß der Einsatz von Vermittlungspersonal nicht erforderlich ist. Zu diesem Zweck ist ein computergesteuertes Vermittlungssystem vorgesehen, dem der Anrufende die Rufnummer des Anrufempfängers mitteilt. Eingegeben wird die Rufnummer des Anrufempfängers über die Wahltastatur des auf Seiten des Anrufenden vorgesehenen Telefonapparates, so daß bei richtiger Eingabe durch den Anrufenden Vermittlungsfehler ausgeschlossen werden können. Die dem Vermittlungssystem auf diese Weise mitgeteilte Rufnummer wird zunächst in einem Datenbankabgleich auf Gültigkeit überprüft. Umfang einer solchen Prüfung kann beispielsweise die vom Anrufenden übertragene Rufnummer als solche sein, das heißt es wird in einem ersten Schritt vom System zunächst einmal überprüft, ob die vom Anrufenden angegebene Rufnummer tatsächlich existent ist. Je nach Informationsstand der Datenbank kann darüber hinaus überprüft werden, ob die als existent erkannte Rufnummer unter Umständen gesperrt ist, ob noch etwaig nicht gezahlte Rechnungen zur angegebenen Rufnummer existent sind oder ob die Rufnummer im Rahmen eines R-Gespräches nicht anwählbar ist. Darüber hinaus sind je nach Bedarf weitere Überprüfungskriterien möglich, je nachdem, welche Informationen im Detail in der zur Gültigkeitsüberprüfung genutzten Datenbank gespeichert sind.

Nach erfolgreich durchgeführter Gültigkeitsüberprüfung der Rufnummer wird der Anrufempfänger vom Vermittlungssystem automatisch angewählt und über die Kostenfolge bei Entgegennahme des Telefongespräches informiert. Stimmt der Anrufempfänger der Übernahme der Telefongesprächkosten zu, so baut das Vermittlungssystem zwischen dem Anrufenden und dem Anrufempfänger automatisch eine kommunikationstechnische Verbindung auf, so daß diese nunmehr das vom Anrufenden gewünschte Telefongespräch führen können. Die infolge dieses Telefongespräches entstehenden Kosten werden dem Anrufempfänger in Rechnung gestellt.

Sollte der Anrufempfänger einer Kostenübernahme nicht zustimmen, so wird der Anrufende vom Vermittlungssystem hierüber informiert und eine kommunikationsstechnische Verbindung zwischen dem Anrufenden und dem Anrufempfänger wird seitens des Vermittlungssystems nicht aufgebaut.

Die im Unterschied zum Stand der Technik vollautomatische Telefongesprächsvermittlung ermöglicht in vorteilhafter Weise zum einen einen vergleichsweise schnellen Verbindungsaufbau, zum anderen stellt sich eine deutlich verringerte Fehlerquote ein, denn erfolgt eine Gesprächsvermittlung ausschließlich aufgrund der vom Anrufenden selbst eingegebenen Rufnummer. Darüber hinaus ist das erfindungsgemäße Verfahren sehr viel weniger kostenintensiv, denn können insbesondere Personalkosten eingespart werden, da es nicht weiter erforderlich ist, zur Gesprächsvermittlung Vermittlungspersonal einzusetzen.

Gemäß einem besonderen Merkmal der Erfindung ist vorgesehen, daß das Vermittlungssystem vom Anrufenden angewählt wird, wobei zeitgleich mit Anwahl des Vermittlungssystems die Rufnummer des Anrufempfängers an das Vermittlungssystem übertragen wird. Zu diesem Zweck ist erfindungsgemäß vorgesehen, daß der Anrufer zur Anwahl des Vermittlungssystems eine mehrstellige Rufnummer verwendet, die aus Anwahlnummer für das Vermittlungssystem einerseits und der Rufnummer des Anrufempfängers andererseits besteht. So kann beispielsweise vorgesehen sein, daß die Rufnummer zur Anwahl des Vermittlungssystems ein mehrstelliger Zahlencode ist, der eine definierte Ziffernzahl aufweist. Angehängt an diesen Zahlencode ist die Rufnummer des Anrufempfängers, die beispielsweise aus Vorwahl und Apparatennummer des Anrufempfängers gebildet ist. Vom Vermittlungssystem wird die an den Zahlencode angehängte Rufnummer des Anrufempfängers automatisch erkannt, so daß diesem bereits mit Anwahl durch den Anrufenden die im weiteren zu wählende Rufnummer des Anrufempfängers bekannt ist.

Nach Anwahl des Vermittlungssystems durch den Anrufenden kann alsdann anhand der bereits bekannten Rufnummer des Anrufempfängers eine Statusüberprüfung des Anrufempfängers durchgeführt werden, das heißt es kann vom Vermittlungssystem überprüft werden, ob der Anschluß des Anrufempfängers besetzt ist oder nicht. Sollte diese Überprüfung ergeben, daß der Anschluß des Anrufempfängers besetzt ist, so wird dies dem Anrufenden automatisch mitgeteilt und die Verbindung zwischen Anrufendem und Vermittlungssystem wird automatisch unterbrochen. Das Gespräch ist damit beendet.

Sollte die Statusüberprüfung des Anrufempfängers ergeben, daß der Anschluß des Anrufempfängers nicht besetzt ist, so erfolgt in einem Datenbankabgleich eine Gültigkeitsüberprüfung der Rufnummer des Anschlußempfängers. Zeitgleich wird durch Einschaltung des Freizeichens dem Anrufenden signalisiert, daß der Anschluß des Anrufempfängers nicht besetzt ist und nach abgeschlossener Gültigkeitsüberprüfung der Rufnummer eine Verbindung zum Anrufempfanger aufgebaut wird.

Sollte sich nach einer Gültigkeitsüberprüfung der von dem Anrufenden angegebenen Rufnummer ergeben, daß diese nicht existent, gesperrt oder sonstwie nicht zugänglich für ein empfangsseitig zu zahlendes Telefongespräch ist, so wird der Anrufende hierüber gleichfalls vom Vermittlungssystem automatisch informiert. Zu diesem Zweck stehen dem Vermittlungssystem entsprechende Ansagen, vorzugsweise in digitaler Form, zur Verfügung, die vom Vermittlungssystem verwaltet und bedarfsgerecht abgespielt werden können Sollte hingegen die Rufnummernüberprüfung erfolgreich durchgeführt sein, so wird eine kommunikationstechnische Verbindung zwischen dem Anrufenden einerseits und dem Anrufempfänger andererseits aufgebaut. Nimmt der Anrufempfänger beispielsweise wegen Abwesenheit das bei ihm eingehende Gespräch nicht entgegen, so wird der Anrufende hierüber informiert und die Verbindung zwischen dem Anrufenden und dem Vermittlungssystem wird unterbrochen.

Nimmt der Anrufempfänger den bei ihm eingehenden Anruf entgegen, so werden zunächst einmal der Anrufende und der Anrufempfänger vom Vermittlungssystem über die anstehende Vermittlung des empfangsseitig zu zahlenden Telefongespräches informiert. In diesem Zusammenhang wird der Anrufende vom Vermittlungssystem dazu aufgefordert, beispielsweise im Anschluß an ein vom Vermittlungssystem übersandtes akustisches Signal, eine ihn identifizierende Information, vorzugsweise seinen Namen, bekannt zu geben, was vorzugsweise mittels Spracheingabe geschieht. Zudem können dem Anrufenden weitergehende Informationen zur Anwendung, Hilfestellung oder dergleichen übermittelt werden. Der Anrufempfänger wird indes vom Vermittlungssystem über die Funktionsweise des empfangsseitig zu zahlenden Telefongespräches sowie über die gültigen Tarife informiert. Alsdann wird vom Vermittlungssystem eine kommunikationstechnische Verbindung zwischen dem Anrufenden und dem Anrufempfänger für ein vorgebbares Zeitintervall automatisch aufgebaut und der Anrufer wird durch Abgabe eines entsprechenden Signals dazu aufgefordert, nunmehr seine ihn identifizierende Information, vorzugsweise durch Spracheingabe bekannt zu machen. Diese wird dann über die aufgebaute kommunikationstechnische Verbindung zwischen Anrufendem und Anrufempfänger direkt an den Anrufempfänger weitergeleitet, so daß dieser darüber in Kenntnis gesetzt wird, wer die Person des Anrufenden ist. Nach Ablauf des vorgebbaren Zeitintervalls wird die kommunikationstechnische Verbindung zwischen Anrufendem und Anrufempfänger wieder getrennt.

Im weiteren wird nun der Anrufende vom Verbindungssystem dazu aufgefordert, die Verbindung zu halten, während der Anrufempfänger vom Verbindungssystem nach seinem Einverständnis befragt wird, die Kosten des Telefongespräches zu übernehmen. Im Falle der positiven Bestätigung durch den Anrufempfänger wird erneut eine kommunikationstechnische Verbindung zwischen Anrufendem und Anrufempfänger aufgebaut, so daß nunmehr das Telefongespräch geführt werden kann. Sollte der Anrufempfänger sein Einverständnis zur Kostenübernahme nicht geben, so wird dies dem Anrufenden mitgeteilt und die Verbindung des Anrufenden zum Vermittlungssystem einerseits sowie auch die Verbindung des Vermittlungssystems zum Anrufempfängers andererseits wird abgebrochen. Das Gespräch ist damit beendet.

Im Unterschied zu dem aus dem Stand der Technik bekannten Verfahren ist das erfindungsgemäße Verfahren mithin nicht nur vollautomatisch durchführbar, zudem wird bereits mit Anwahl des Vermittlungssystems durch den Anrufenden die Rufnummer des Anrufempfängers übertragen. Es findet mithin in vorteilhafter Weise keine zeitraubende Kommunikation mehr zwischen Anrufendem und Vermittlungssystem statt. Hierdurch kann nicht nur die Vermittlungszeit zwischen Anrufendem und Anrufempfänger verkürzt werden, auch ergibt sich hierdurch eine Kostenreduzierung, denn gehen die Kosten zur Vermittlungsverbindung zwischen Anrufendem und Vermittlungssystem zu Lasten des Netzbetreibers.

Von Vorteil ist des weiteren, daß die zur Identifizierung des Anrufenden an den Anrufempfänger zu übermittelnde Information nicht über das Vermittlungssystem, sondern über eine direkt zwischen dem Anrufenden und dem Anrufempfänger temporär ausgebildete kommunikationstechnische Verbindung geführt wird. Erreicht wird hierdurch eine Entlastung des Vermittlungssystems, das nur eine begrenzte Anzahl von Vermittlungsdiensten gleichzeitig abwickeln kann. Darüber hinaus kann im Falle der Gesprächsautorisierung durch den Anrufempfänger auch die zur Übertragung der den Anrufenden identifizierenden Information erfolgte Freischaltung der kommunikationstechnischen Verbindung zwischen Anrufendem und Anrufempfänger in Rechnung gestellt werden. Zu Lasten des Anrufempfängers kann so eine weitere Kostenreduzierung des das Vermittlungssystem bereitstellenden Betreibers erreicht werden.

Gemäß einem alternativen Vorschlag der Erfindung ist vorgesehen, daß das Vermittlungssystem vom Anrufenden angewählt wird und erst nach einem Verbindungsaufbau zwischen Vermittlungssystem und Anrufendem die Rufnummer des Anrufempfängers an das Vermittlungssystem übertragen wird. Vorgesehen ist gemäß dieser Ausgestaltung der Erfindung, daß der Anrufende zunächst das Vermittlungssystem über eine entsprechende Rufnummer anwählt. Eine solche Rufnummer kann von dem die Vermittlung betreibenden Telekommunikationsunternehmen als Servicerufnummer ausgebildet sein, die vom Anrufenden kostenfrei gewählt werden kann. Sobald die kommunikationstechnische Verbindung zwischen Anrufendem und Vermittlungssystem aufgebaut ist, wird der Anrufende vom Vermittlungssystem dazu aufgefordert, die Rufnummer des von ihm gewünschten Anrufempfängers zu benennen. Dies kann beispielsweise durch Eingabe über das vom Anrufenden verwendete Endgerät oder aber auch durch Spracheingabe erfolgen. Zudem können dem Anrufenden weitergehende Informationen zur Anwendung, Hilfestellung oder dergleichen übermittelt werden.

Zur Identifikation des Anrufenden durch den Anrufempfänger fordert das Vermittlungssystem zudem dazu auf, eine den Anrufenden identifizierende Information an das Vermittlungssystem zu übertragen.

Sobald dem Vermittlungssystem die Rufnummer des Anrufempfängers sowie die den Anrufenden identifizierende Information bekannt sind, wird der Anrufempfänger vom Vermittlungssystem automatisch angewählt. Sofern dieser das Gespräch entgegennimmt, wird ihm vom Vermittlungssystem die den Anrufenden identifizierende Information, beispielsweise der Name des Anrufenden, mitgeteilt und er wird vom Vermittlungssystem darüber informiert, daß nach seiner Autorisierung die Kosten des zwischen ihm und den Anrufenden zu führende Telefongespräch zu seinen Lasten geht. Durch Tasteneingabe am Telefon oder durch Spracheingabe wird dem Anrufempfänger daraufhin vom Vermittlungssystem die Gelegenheit gegeben, sein Einverständnis zur Kostenübernahme zu erklären. Erklärt der Anrufempfänger sein Einverständnis, so wird eine komunikationstechnische Verbindung zwischen dem Anrufenden und dem Anrufempfänger automatisch aufgebaut. Unterbleibt die Einverständniserklärung des Anrufempfängers, so kommt eine kommunikationstechnische Verbindung zwischen dem Anrufenden und dem Anrufempfänger nicht zustande und der Anrufende wird vom Vermittlungssystem über das Ausbleiben des Einverständnisses des Anrufempfängers informiert.

Vorzugsweise ist die Vermittlung des empfangsseitig zu zahlenden Telefongespräches sowohl für den Anrufenden als auch für den Anrufempfänger kostenlos. Erst nach dem durch den Anrufempfänger autorisierten Zustandekommen der kommunikationstechnischen Verbindung zwischen dem Anrufenden und dem Anrufempfänger entstehen die vom Anrufempfänger zu übernehmenden Kosten. Für eine exakte Abrechnung wird daher der Zeitpunkt des Zustandekommens der kommunikationstechnischen Verbindung zwischen dem Anrufenden und dem Anrufempfänger vom Vermittlungssystem erfaßt und die Zeit bis zur Beendigung der kommunikationstechnischen Verbindung gestoppt. Die sich hieraus ergebende Zeitdauer ergibt in Kombination mit dem für das Telefongespräch gültigen Tarif die vom Anrufempfänger zu zahlenden Gebühren. Erfindungsgemäß ist dabei vorgesehen, daß die zu zahlenden Gebühren automatisch vom Vermittlungssystem berechnet und dem Anrufempfänger in Rechnung gestellt werden. Der automatisch berechnete Rechnungsbetrag kann zudem in der Datenbank des Vermittlungssystems gespeichert werden, um so bei der vorbeschriebenen Gültigkeitsüberprüfung ein mögliches Ausschlußkriterium definieren zu können. Dies könnte sich beispielsweise dann ergeben, wenn der Anrufempfänger einer Begleichung noch offener Rechnungen nicht nachkommt, so daß die Rufnummer des Anrufempfängers für die Vermittlung vom empfangsseitig zu zahlenden Telefongesprächen solange gesperrt bleibt, bis die noch offenen Rechnungen bezahlt sind. Vorzugsweise ist daher auch der Zahlungseingang in der Datenbank des Vermittlungssystems zu speichern.

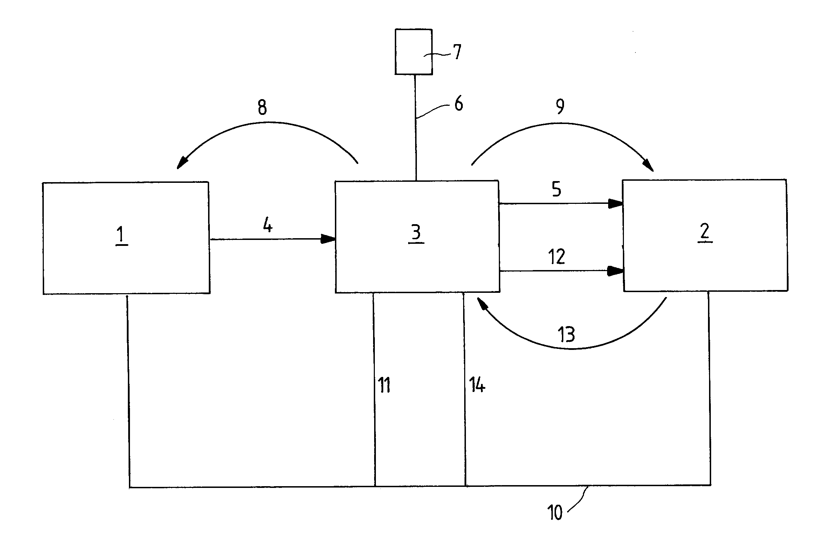

Weitere Merkmale und Vorteile der Erfindung ergeben sich aus der nachfolgenden Beschreibung anhand der Fig. 1, die in schematischer Darstellung den Ablauf des erfindungsgemäßen Verfahrens zeigt.

Dargestellt in Fig. 1 ist schematisch der Anrufende 1, der Anrufempfänger 2 sowie das Vermittlungssystem 3. Kommunikationstechnisch verbunden sind der Anrufende 1 und der Anrufempfänger 2 über die Leitung 10, deren Freischaltung erfindungsgemäß wie nachfolgend beschrieben erfolgt.

Gemäß erstem Verfahrensschritt wird das Vermittlungssystem 3 vom Anrufenden 1 angewählt. Symbolisch dargestellt ist dies in der Fig. 1 durch den mit 4 gekennzeichneten Pfeil. Zur Anwahl des Vermittlungssystems 3 dient eine mehrzahlige Rufnummer, die aus der Anwahlnummer des Vermittlungssystems 3 einerseits und der Rufnummer des Anrufempfängers 2 zusammengesetzt ist. Die zur Anwahl des Vermittlungssystems 3 zur Verfügung stehende Zahlenkombination ist hinsichlich ihrer Stellen definiert, so daß das Vermittlungssystem eine eindeutige Identifizierung der an die Wahlnummer für das Vermittlungssystem 3 angehängten Rufnummer des Anrufempfängers vornehmen kann. Bereits durch Anwahl des Vermittlungssystems 3 durch den Anrufenden 1 wird diesem somit die Rufnummer des Anrufempfängers mitgeteilt.

Anhand der dem Vermittlungssystem 3 bekannten Rufnummer des Anrufempfängers wird eine Statusüberprüfung des Anrufempfängers durchgeführt, das heißt es wird vom Vermittlungssystem 3 automatisch überprüft, ob der Anschluß des Anrufempfängers besetzt ist oder nicht. Gekennzeichnet ist diese Statusüberprüfung in Fig. 1 durch den mit 5 bezeichneten Pfeil. Zeitgleich zur Statusüberprüfung des Anrufempfängers wird in einem Datenbankabgleich die Rufnummer des Anrufempfängers auf Gültigkeit überprüft. Zu diesem Zweck steht das Vermittlungssystem 3 über eine Leitung kommunikationstechnisch mit einer Datenbank 7 in Verbindung. Die Gültigkeitsüberprüfung der Rufnummer des Anrufempfängers umfaßt zumindest die Prüfung auf Existenz der Rufnummer, kann aber auch darüber hinaus weitergehende Prüfschritte beinhalten, so zum Beispiel die Prüfung danach, ob die dem Grunde nach existente Rufnummer gesperrt ist, oder ob der Inhaber dieser Rufnummer noch unbezahlte Rechnungen offen hat oder dergleichen.

Nach Abschluß der vermittlungssystemseitigen Überprüfung der Rufnummer wird dem Anrufenden 1 vom Vermittlungssystem 3 mitgeteilt, daß dieser zu seiner Identifizierung seinen Namen nach Ertönen beispielsweise eines akustischen Signals zu nennen hat. Diese Informationsvermittlung ist in Fig. 1 durch den mit 8 bezeichneten Pfeil symbolisiert. Zeitgleich zur Unterrichtung des Anrufenden 1 wird der Anrufempfänger vom Vermittlungssystem 3 gemäß dem Kommunikationspfeil 9 über das zur Vermittlung anstehende Telefongespräch informiert. Darüber hinaus erhält der Anrufempfänger Tarifinformationen betreffend das bei erfolgreicher Gesprächsvermittlung von ihm zu zahlende Telefongespräch.

Sobald der Anrufende 1 und der Anrufempfänger 2 entsprechend der Kommunikationspfeile 8 und 9 informiert sind, schaltet das Vermittlungssystem 3 die kommunikationstechnische Verbindung 10 zwischen Anrufendem 1 und Anrufempfänger 2 für ein vorgebbares Zeitintervall frei. Symbolisiert ist diese Freischaltung durch den in Fig. 1 mit 11 bezeichneten Pfeil. Mit Freischaltung der kommunikationstechnischen Verbindung 10 ertönt ein zumindest vom Anrufenden 1 wahrnehmbares akustisches Signal, mit welchem ihm angezeigt wird, daß er nun seinen Namen laut und deutlich auszusprechen hat. Das hierfür vom Vermittlungssystem 3 vorgesehene Zeitintervall kann auf 1 bis 2 Sekunden beschränkt sein Übertragen wird die seitens des Anrufenden 1 erfolgte Namensnennung über die kommunikationstechnische Verbindung 10 direkt an den Anrufempfänger 2. Auf diese Weise wird dieser in Kenntnis darüber gesetzt, wer die Person des Anrufenden 1 ist. Nach Ablauf des vorgegebenen Zeitintervalls wird die kommunikationstechnische Verbindung 10 zwischen dem Anrufenden 1 und den Anrufempfänger 2 wieder unterbrochen, so daß eine weitere Kommunikation zwischen Anrufendem 1 und Anrufempfänger 2 nicht weiter möglich ist.

Um sicherzustellen, daß die vom Anrufenden zur Identifizierung seiner Person zu übergebende Information nicht mißbräuchlich zur Übermittlung von Kurzinformationen an den Anrufempfänger genutzt wird, ist erfindungsgemäß vorgesehen, daß die den Anrufenden identifizierende Information nur eine bestimmte Wort- oder Zeichenlänge aufweisen darf. Zu diesem Zweck kann beispielsweise vorgesehen sein, daß die Zeit, die dem Anrufenden vom Vermittlungssystem zur Übermittlung der ihn identifizierenden Information zur Verfügung gestellt wird, zeitlich begrenzt ist. Vorgesehen sein kann in diesem Zusammenhang beispielsweise ein Zeitrahmen von 1 bis 2 Sekunden. Eine den Anrufenden identifizierenden Information, die nicht innerhalb dieses Zeitrahmens dem Vermittlungssystem mitgeteilt werden kann, wird wahlweise entweder gar nicht oder nur bezüglich der im Zeitrahmen übermittelten Information an den Anrufempfänger weitergeleitet. Zudem kann bei einer vom Vermittlungssystem festgestellten häufigen Überschreitung des zur Informationsvermittlung zur Verfügung stehenden Zeitrahmens ein entsprechender Eintrag in der Datenbank vorgenommen werden, der gleichfalls zur Sperrung der Rufnummer des Anrufempfängers oder des Anrufenden verwendet werden kann.

Gemäß Kommunikationspfeil 9 wird der Anrufempfänger 2 nunmehr nach seinem Einverständnis zur Kostenübernahme befragt. Stimmt dieser nicht zu, so wird das Gespräch beendet und der Anrufende 1 hierüber entsprechend informiert.

Sollte der Anrufempfänger 2 mit der Kostenübernahme einverstanden sein, so hat er dem Vermittlungssystem 3 gegenüber sein Einverständnis zu erklären, was beispielsweise durch Sprach- oder Tasteneingabe am anrufempfängerseitigen Apparat vorgenommen werden kann. Symbolisiert ist die Einverständniserklärung des Anrufempfängers 2 durch den in Fig. 1 mit 13 gekennzeichneten Pfeil Während der Einverständnisfrage durch das Vermittlungssystem 3 wird der Anrufende 1 in Wartestellung gehalten und gegebenenfalls über den Fortgang der Einverständnisbefragung informiert. Sobald das Einverständnis seitens des Anrufempfängers 2 vorliegt, wird die kommunikationstechnische Verbindung zwischen Anrufendem 1 und Anrufempfänger 2 vom Vermittlungssystem 3 freigeschaltet, was durch den mit 14 gekennzeichneten Pfeil symbolhaft dargestellt ist. Der Beginn der Freischaltung der kommunikationstechnischen Verbindung 10 wird vom Vermittlungssystem 3 erfaßt, so daß dieses die Dauer des Telefongespräches zwischen dem Anrufenden 1 und dem Anrufempfänger 2 ermitteln kann. Hinzuaddiert wird zur Gesamtdauer des Telefongespräches die im Vorfeld zur Übermittlung des Namens des Anrufers erfolgte Freischaltung der kommunikationstechnischen Verbindung 10, so daß auch diese dem Anrufempfänger in Rechnung gestellt werden kann. Die sich durch die Addition insgesamt ergebende Gesprächsdauer wird vom Vermittlungssystem 3 automatisch berechnet und in Abhängigkeit der geltenden Tarife in die vom Anrufempfänger zu zahlende Gebühr umgerechnet.

## Patentansprüche

1. Verfahren zur Vermittlung von empfangsseitig zu zahlenden Telefongesprächen, bei dem die Rufnummer des Anrufempfängers vom Anrufenden an ein Vermittlungssystem übertragen wird, die Rufnummer in einem Datenbankabgleich auf Gültigkeit überprüft wird und anschließend nach vorhergehender Autorisierung durch den Anrufempfänger eine kommunikationstechnische Verbindung zwischen dem Anrufenden und dem Anrufempfänger automatisch aufgebaut wird.

2. Verfahren nach Anspruch 1, **dadurch gekennzeichnet, daß** das Vermittlungssystem vom Anrufenden angewählt wird, wobei zeitgleich mit der Anwahl des Vermittlungssystems die Rufnummer des Anrufempfängers an das Vermittlungssystem übertragen wird.

3. Verfahren nach Anspruch 1 oder 2, **dadurch gekennzeichnet, daß** eine Statusüberprüfung des Anrufempfängers durchgeführt wird.

4. Verfahren nach einem der Ansprüche 1 bis 3, **dadurch gekennzeichnet, daß** nach erfolgreicher Statusüberprüfung eine kommunikationstechnische Verbindung zwischen dem Anrufenden und dem Anrufempfänger für ein vorggebbares Zeitintervall automatisch aufgebaut wird.

5. Verfahren nach einem der vorhergehenden Ansprüche, **dadurch gekennzeichnet, daß** für die kommunikationstechnische Verbindung zwischen Anrufendem und Anrufempfänger eine den Anrufenden identifizierende Information vom Anrufendem zum Anrufempfänger übertragen wird.

6. Verfahren nach einem der vorhergehenden Ansprüche, **dadurch gekennzeichnet, daß** nach einer Übermittlung der den Anrufenden identifizierenden Information und/oder nach Ablauf eines vorgebbaren Zeitintervalls die kommunikationstechnische Verbindung zwischen Anrufendem und Anrufempfänger automatisch getrennt wird.

7. Verfahren nach einem der vorhergehenden Ansprüche, **dadurch gekennzeichnet, daß** vom Vermittlungssystem Tarifinformationen an den Anrufempfänger übertragen werden.

8. Verfahren nach einem der vorhergehenden Ansprüche, **dadurch gekennzeichnet, daß** der Anrufempfänger vom Vermittlungssystem automatisch zur Gesprächsautorisierung aufgefordert wird.

9. Verfahren nach einem der vorhergehenden Ansprüche, **dadurch gekennzeichnet, daß** bei ausbleibender Autorisierung durch den Anrufempfänger der Anrufende vom Vermittlungssystem informiert und das Gespräch beendet wird.

10. Verfahren nach einem der vorhergehenden Ansprüche, **dadurch gekennzeichnet, daß** nach erfolgtem Telefongespräch die hierfür zu zahlende Gebühr automatisch berechnet und dem Anrufempfänger in Rechnung gestellt wird.
